# EUROPEAN PATENT APPLICATION

(11) **EP 4 668 226 A1**
(43) Date of publication of application: **24.12.2025**
(21) Application number: 24182667.6
(22) Date of filing: 17.06.2024
(51) Int. Cl.: G06V 10/764, G06N 3/0475, G06N 3/094, G06T 5/50, G06T 7/00, G06T 11/00, G06V 10/772, G06V 10/774, G06V 10/82

(54) **METHODS AND SYSTEMS FOR AUTOMATED VISUAL OBJECT INSPECTION USING A TRAINED MACHINE LEARNING MODEL FOR IMAGE CLASSIFICATION**

(71) Applicant: InspectifAI GmbH, 76131 Karlsruhe (DE)
(72) Inventor: Strube, Moritz, 76131 Karlsruhe (DE)
(74) Representative: Platzöder Patentanwaltsgesellschaft mbH

(57) **Abstract**

A computer-implemented method of generating training data for a first machine learning model for image classification uses an image style transformation to transform a set of first images having a first image style into a corresponding set of images with preserved image content but of a second image style. The image style transformation may particularly be performed using a GAN. The transformed images are used as training data to train a first machine learning model for image classification according to a defined classification scheme. The trained first machine learning model is then used for inspecting images, e.g., of products during or after their manufacturing, and for classifying them according to the classification scheme. Further provided are a data processing system comprising a computer program implementing the training methods is used for the training, and an inspection system comprising a computer program implementing the inspection method.

## Description

The present invention relates to a method and a system for generating training data for training a (first) machine learning model for image classification. It further relates to an inspection method and an inspection system for automated visual object inspection which use the first machine learning model having been trained with the training data.

In the field of image processing through machine learning, it is common to train machine learning models with training data comprising numerous images. In this context, methods of so-called "Deep Learning" are increasingly used for the classification of images. Corresponding Deep Learning models are trained in a process known as supervised learning, which requires large amounts of training data and where each image in the training data must have (i.e., be "labeled" with) an associated application-specific classification information indicating at least one particular class of a defined classification scheme to which the respective training image is assigned. These models generalize, meaning they can be applied to images that were not included in the training data.

An important requirement for generalization is that the statistical properties of the images that were not part of the training data are the same as those of the images of the training data, i.e., characteristic properties are statistically represented in both sets of images.

However, this is fraught with drawbacks: if, for example, training data comprising training images with widely divergent statistical properties are used for training, machine learning models may quickly reach their limits in terms of their ability to generalize, and the performance of these models may then decrease sharply. This becomes especially critical if, in a binary classification scheme with only two classes (e.g., in the case of a defect classification, a "positive" class for images with detected defects and a "negative class for images without detected defects), images of instances of the negative class have different statistical properties than instances of the positive class. Such situations bear the risk that during training, the classification model rather learns general statistical properties of the images of a respective class than the properties relevant for the classification itself. A classification model trained in this way may thus easily produce misjudgments if the statistical properties of the images differ during inference (data bias / data leakage).

In particular, for training data created under controlled conditions, problems may arise, if the conditions each have a low variance across the various training images in the training data and such variance is specific to and characteristic of the training data.

Moreover, an application-specific extraction of image data and classifications is generally very time-consuming and costly. The additional requirement that image data for training be representative of image data to which the machine learning model, once trained, is to be applied typically precludes the use of training data that does not meet this requirement.

In principle, the difficulty of generating image data, particularly in large volume, can be countered by generating synthetic image data. In addition, when synthetic images are generated, the class membership (labeling) for supervised learning can typically be determined. However, in general, the statistical properties of the synthetically generated images differ greatly from the statistical properties of the real images to which the trained models are to be applied later on for classification purposes. Thus, so far, it is often not possible to effectively use synthetic data for a training of machine learning models.

It is an object of the present invention to improve the training of a machine-learning model for image classification. A further, related object is to improve the inspection of objects using such a trained machine-learning model for image classification.

A first aspect of the present solution is directed to a computer-implemented method of generating training data for a first machine learning model for image classification. The method comprises:
(i) obtaining or accessing a set of first images sharing a common first image style and a set of second images sharing a common second image style being different from the first image style, wherein each of the first and second images individually represents a respective individual image content;
(ii) using the sets of first and second images to train a generative second machine-learning model so that the second machine-learning model defines a non-affine transformation between the first image style and the second image style, the training comprising:
   - extracting, from the set of first images as a whole, statistical style information representing one or more specific properties characterizing the first image style;
   - extracting from the set of second images as a whole statistical style information representing one or more specific properties of the second image style, and
   - training the second machine learning model (G) to define the transformation as an image transformation for transferring the extracted properties of the second image style to the first images, so as to transform the first images into corresponding output images, each having the second image style while preserving their individual image content; and
(iii) generating training data for training the first machine learning model, comprising:
   - obtaining or accessing a training dataset defining a plurality of training images sharing the first image style, each of the training images representing a respective individual image content and being individually labeled based on its individual image content according to a predetermined classification scheme;
   - transforming the training images into corresponding transformed training images using the trained second machine learning model and assigning to each of the transformed training images the respective labeling of its corresponding training image; and
   - providing the set of transformed and labeled training images as training data for the first machine learning model.

Accordingly, the method makes it possible to make computer-generated images being provided as not directly usable image data accessible for use in the deep learning model by transferring style information (style transfer). In particular, in this way, images can be used for the inference of models even when the statistical properties of such images differ from those of images that were used to train the models.

The method also provides a solution for the reverse case, i.e., the task of training models with images whose statistical properties differ from those of images used for inference.

This makes it possible to use computer-generated images with deviating style information for training and application (inference) in a machine learning application (e.g., for classifying visual measurement data).

The classification of real images represents a major challenge in practice, as it is time-consuming and costly. These costs and the time required can thus be reduced.

### Terms

Some terms used herein to define the present solution are explained below in more detail:
The term "image", as used herein, may particularly relate to a digital image, such as a two-dimensional or even three-dimensional digital image. An image may particularly have been generated by an image-sensor such as a camera, or may have been computer-generated. Mixes are possible, too: For example, an image may comprise portions or aspects, e.g., image content or image style, having been sensed using a first image sensor and other portions or aspects having been computer-generated or sensed using a second, different image sensor.

The term "image style" (of an image) or "style" for short, as used herein, refers to one or more properties of the image which define a manner with which the image content, e.g., a pictured object, is presented in the image. Specifically, image style may relate to a statistics of one or more of such properties of the image and may thus be defined through statistical style information. Accordingly, on the one hand, a set of images might share a same image content, such as a picture of a particular type of object (e.g., glass bottle) while the image style, i.e., the manner with which the object is presented in the various images of the set, differs from image to image. On the other hand, the images in a set of images may each have a different individual image content but share a same image style. While more examples for "image style" will be presented below, for instance a color temperature or other coloring scheme, shadowing, reflections, brightness, contrast etc. may in any combination or each individually define an image style.

The term "image content" or "content" for short (of an image), as used herein, refers to the underlying meaning, information, or features that make up the image. It encompasses various aspects that can be extracted, analyzed, or understood from an image, including:
- Visual elements: Shapes, lines, curves, textures, patterns, colors, and other visual attributes that make up the image;
- Semantic meaning: The objects, scenes, events, or concepts depicted in the image, which can be interpreted by a human observer or analyzed using computer vision algorithms;
- Contextual information: The spatial relationships between visual elements, such as proximity, orientation, and layout, which provide clues about the image's content; and
- High-level features: Abstract concepts like faces, animals, vehicles, buildings, or other objects, or natural environments that can be recognized in an image.

Specifically, when the term "individual image content" is used regarding an image in a set of images, this means that - in general - the image may have its own distinct image content, i.e., an image content that differs in at least one aspect from the respective image contents of the other images in the set. However, this does not preclude the possibility that in particular cases a subset comprising two or more of the images in the set have a same image content. In other words, the technical possibility (degree of freedom) of each image having its unique own image content is provided, but there is no requirement to exclude the possibility to use this degree of freedom to also allow for shared image content among the images.

The term "common image style-invariant type of image content", as used herein, refers to image content that is shared among two or more images, while these images may differ regarding other image content and/or their image styles. For example, a common image style-invariant type of image content may be identified as a particular type of object (e.g., product) which is pictured by each of the considered images, independent of their respective image style. The respective individual image content of each image may then be provided by an image-specific variation of such object of the given type, particularly by the presence, kind, location and/or number of any object-related defects in the respective image.

The term "generative (second) machine-learning model", as used herein, refers to a machine-learning ("ML") model that is configured to and capable of generating text, images, or other media in response to an input, such as a prompt, or a random sample. Generative ML models are trained where they typically learn the patterns and structure of their input training data, and then generate new data that has similar characteristics. In the present context, a generative machine-learning model is an ML model that defines an image transformation, i.e., it is configured to receive on or more input images and to transform them into one or more output images, thereby transferring an image style of the input images to each of the output images while preserving the respective individual image content of each image so that the input image and its corresponding output image share the same individual image content while their image style differs. Examples of various types of generative ML-models will be provided further below and comprise, particularly, so-called Generative Adversarial Networks (GAN) and so-called Diffusion Models (DM).

The term "Generative Adversarial Network" or "GAN" for short, when used in the context of Artificial Intelligence (Al), particularly in Generative Modeling, and as used also herein, refers to a type of deep learning architecture designed to generate new, synthetic data that resembles real-world distributions. GANs consist of two primary components: (1) A "generator" comprising a neural network responsible for generating new data samples from a random noise input, and (2) a "discriminator" comprising another neural network tasked with distinguishing between the generated samples and real data. A core idea behind GANs is to have these two networks compete with each other, thereby driving both networks to improve in performance. This competition leads to (i) generator improvement: As the generator produces more realistic samples, the discriminator becomes more skilled at detecting them, and (ii) discriminator improving: As the discriminator gets better at identifying real vs. generated data, the generator adapts to produce even more convincing samples. This adversarial process continues until both networks reach a balance, where the generator can produce highly realistic synthetic data that is indistinguishable from real-world data, and the discriminator is unable to differentiate between them.

The terms "Cyclic Generative Adversarial Network", "Cyclic GAN, or "cGAN" for short, as used herein, refer to a variant of a traditional Generative Adversarial Network (GAN) architecture that incorporates an additional cycle-consistency loss term. This modification allows the network to learn more robust and accurate mappings between two domains, often referred to as "source" and "target" domains. Typically, a cGAN has (at least) the following components: (i) a Generator Network comprising a neural network that maps input data from one domain (e.g., source) to the other domain (e.g., target); (ii) a Discriminator Network comprising a neural network that evaluates the generated data and tells the generator whether it's convincing or not, and (iii) a Cycle-Consistency Loss Term which is an additional loss term that encourages the generator to preserve information from both domains, rather than simply translating between them, to avoid or mitigate losing patterns or introducing new patterns.

The terms "Single Generative Adversarial Network" or "SGAN" for short, as used herein, refer to a type of GAN that generates synthetic data samples from a single domain or distribution. In contrast, Cyclic GANs generate data samples between two domains. Typically, an SGAN has (at least) the following components: (i) a generator network comprising neural network that maps input noise vectors to generated data samples, and (ii) a discriminator network comprising a neural network that evaluates the generated data samples and tells the generator whether they're convincing or not. A primary objective of an SGAN is to learn a mapping from a latent space (noise vector) to a specific domain or distribution, such as images (in the present case), text, or audio. The goal is to generate high-quality, diverse, and realistic data samples that are indistinguishable from real data.

The term "Deep Neural Network" or "DNN" for short is a type of artificial neural network with multiple layers of interconnected nodes or "neurons." Each layer is composed of many neurons, and the connections between them are learned during training. This hierarchical structure allows DNNs to represent complex relationships between inputs and outputs. A DNN is thus a special kind of machine learning model (ML-model).

The term "diffusion model" or "DM" for short, when used in the context of Artificial Intelligence (Al), particularly in generative models, and as used also herein, refers to a type of probabilistic framework that generates synthetic data by iteratively refining an initial noise signal until it resembles a defined target data distribution. This process is often referred to as "denoising" or "diffusion-based generation." The core idea behind diffusion models is to model the process of generating data as a sequence of transformations, where each transformation refines the previous output by adding noise and then denoising it. This iterative process allows the model to gradually learn the underlying distribution of the target data. The diffusion process usually involves the following steps: (1) Initial noise signal: A random noise signal is generated with the same dimensionality as the target data; (2) Denoising step: The initial noise signal is passed through a neural network (typically a convolutional or transformer-based architecture) that refines the signal by adding noise and then denoising it; (3) Repeat steps (1)-(2): The denoised output from the previous iteration becomes the new input for the next iteration, until a stopping criterion is reached (e.g., a maximum number of iterations); and (4) Final output: The resulting synthetic data is generated by applying a final transformation to the output of the last iteration. Specifically, diffusion models are a technology that can be used for generating realistic images or videos that resemble real-world distributions.

The term "non-affine transformation", as used herein, is based on the mathematical concept of an "affine transformation" or "affinity", which is a geometric transformation that preserves lines and parallelism, but not necessarily Euclidean distances and angles. More generally, an affine transformation is an automorphism of an affine space (Euclidean spaces are specific affine spaces), that is, a function which maps an affine space onto itself while preserving both the dimension of any affine subspaces (meaning that it sends points to points, lines to lines, planes to planes, and so on) and the ratios of the lengths of parallel line segments. Consequently, sets of parallel affine subspaces remain parallel after an affine transformation. An affine transformation does not necessarily preserve angles between lines or distances between points, though it does preserve ratios of distances between points lying on a straight line. Accordingly, the term "non-affine transformation", as used herein, relates to a transformation, particularly an image transformation, that does not meet the above definition of affinity. Particularly, this means that a non-affine transformation does not have the constraint that lines and parallelism need to be preserved.

In the context of extracting statistical style information from a set of images "as a whole", the term "as a whole", as used herein, refers to a process involving an extraction of style information from each of the images individually and then determining statistical style information based on the distribution of the gathered individual style information of the various images. Accordingly, the extracted statistical style information is based on multiple images, i.e., their respective image styles, extracts the "style statistics" of the entire set of images and transfers these statistical properties to a target image. Such style information (style statistics) may particularly relate to attributes like brightness, color temperature, image sharpness, coloring. but even image elements, such as shadows or reflections. Extracting statistical style information from a set of images "as a whole" may even involve adding or removing image elements, such as shadows or reflections, or may involve inpainting, i.e., a process of restoring an image by filling in missing or damaged regions. This technique aims to integrate the original image seamlessly with the repaired area, making it difficult to distinguish between the two.

In the context of Artificial Intelligence (Al), the terms "labeling" or "label" and the like refer to the process of assigning a specific label or category to a piece of data, such as an image, audio file, text document, or other type of information. This labeling is typically done manually by humans, but can also be performed automatically using machine learning algorithms. Labeling is crucial in Al because it allows machines to understand the meaning and context of the data, enabling them particularly to classify data, i.e., to group similar data points into categories or classes. Types of labeling include: Binary classification (Assign a single label, e.g., 0 or 1, to indicate whether an example belongs to a specific class or not), Multi-class classification (label each example with one or more labels from a predefined set of categories), and Regression (Predict a continuous value, such as a numerical output or a score).

The term "preserve" image content, as used herein, means that during the style transformation of an image, its image content remains substantially unchanged despite the style transfer. This does not require an absolute equality of image content. Rather, it is sufficient if the image content is largely preserved so that any deviations between the image content of the input image of the style transfer transformation and the resulting output image are negligible for the purpose of classifying the image content of these images according to classification scheme C to be used in connection with the first ML-model M.

The terms "first", "second", "third" and the like in the description and in the claims, are used for distinguishing between similar elements and not necessarily for describing a sequential or chronological order. It is to be understood that the terms so used are interchangeable under appropriate circumstances, and that the embodiments of the present solution described herein are capable of operation in other sequences than described or illustrated herein.

Unless the context requires otherwise, where the term "comprising" or "including" or a variation thereof, such as "comprises" or "comprise" or "include", is used in the present description and claims, it does not exclude other elements or steps and are to be construed in an open, inclusive sense, that is, as "including but not limited to".

Where an indefinite or definite article is used when referring to a singular noun, e.g., "a" or "an", "the", this includes a plural of that noun unless something else is specifically stated.

Appearances of the phrases "in some embodiments", "in one embodiment" or "in an embodiment", if any, in the description are not necessarily all referring to the same embodiment. Furthermore, the particular features, structures, or characteristics may be combined in any suitable manner in one or more embodiments.

Further, unless expressly stated to the contrary, "or" refers to an inclusive OR and not to an exclusive OR. For example, a condition A or B is satisfied by any one of the following: A is true (or present) and B is false (or not present), A is false (or not present) and B is true (or present), and both A and B are true (or present).

By the terms "configured" or "arranged" to perform a particular function, (and respective variations thereof) as they may be used herein, it is to be understood that a relevant device or component is already in a configuration or setting in which it can perform the function, or it is at least adjustable - i.e., configurable - in such a way that it can perform the function after appropriate adjustment. In this context, the configuration can be carried out, for example, through a corresponding setting of parameters of a process sequence or of hardware (HW) or software (SW) or combined HW/SW-switches or the like for activating or deactivating functionalities or settings. In particular, the device may have a plurality of predetermined configurations or operating modes so that the configuration can be performed using a selection of one of these configurations or operating modes.

In the following, preferred embodiments of the method of the first aspect are described, which can be arbitrarily combined with each other or with other aspects of the present solution, unless such combination is explicitly excluded or technically impossible.

The first machine learning model may particularly comprise or consist of an artificial neural network, such as a deep neural network (DNN) which is to be trained for image classification, such as for assigning to each image in a set of input images a corresponding class of the classification scheme. In a simple example, there might be only two classes, such as a "positive" class and a "negative" class. For instance, the positive class be defined as a class of defect-free objects (as represented by the images), e.g., of a particular type of product, while the negative class might be defined as a complementary class of defect-bearing objects. In a more complex scenario, there might be more than just two classes in the classification scheme. For example, in addition to the class for defect-free objects, there might be two or more different classes, each defining an associated kind or severeness of a defect.

In some embodiments, obtaining or accessing the set of first images comprises receiving, accessing, or generating one or more computer-generated images, e.g., images generated using a CAD-environment, as first images. Typically, computer-generated images of a given image style (here of the first image style) may be generated much more efficiently and thus more easily in greater numbers than images that need to be obtained in other ways, e.g., by photography or drawing and the like. Accordingly, training the second ML-model based on computer-generated images as first images yields a trained second ML-model that can later be used to transform a large set of computer-generated training images of the first images style into transformed training images of the second image style (e.g., a photorealistic image style). Having a larger number of training images available for training the first ML-model helps to increase its reliability and thus the quality of its image classification results, when applied to images having the second image style, such as images taken from a real object by a camera.

In some embodiments, obtaining or accessing the set of second images comprises receiving or generating one or more image sensor-generated images as second images. The image sensor may particularly be a camera working in the visible range of the electromagnetic spectrum (light) and/or beyond, e.g., in the infrared (IR) and/or ultraviolet (UV) ranges of the spectrum, such as near-IR or near-UV, respectively. Using image sensor-generated second images may be used to define the image transformation so that a largely realistic (e.g., photorealistic) second image style, i.e., the image style of the sensor-generated second images, is applied to first images to be used as training images in the first machine learning data. For example, the set of second images may comprise a lower number of images than the set of first images (which might be computer-generated in large volumes, as discussed above). Accordingly, the common second image style of relatively few (e.g., more elaborate or expensive to obtain) second images can be transferred to the large(r) number of first images so as to generate a correspondingly large set of training images from the set of first images.

In some embodiments, the second machine learning model comprises a Generative Adversarial Network, GAN. GANs are particularly useful for training the second ML-model because they do not require for their training labeled pairs of images (a pair consisting of a first image and an associated second image having a same or similar image content). Accordingly, GANs are particularly suitable to be used to extract statistical properties defining the second image style from an entire data set (i.e., from the data set "as a whole") comprising a plurality of second images and to transfer these statistical properties to one or more target images, i.e., one or more first images. In this process, it is not specific properties of just one second image that are extracted and transferred, but rather common statistical properties of a set of second images. Specifically, the GAN may comprise or consists of a Single GAN or a conditional GAN.

In the case of a conditional GAN, it may particularly comprise or consists of a cyclic GAN (cGAN). Advantages of using a cGAN instead of a traditional GAN may include improved robustness to domain shifts, allowing it to generalize better across different data distributions, and a preservation of information because the cycle-consistency loss term encourages the generator to preserve information from both domains, rather than losing or introducing new patterns.

In some embodiments, the first machine learning model comprises or consists of an artificial deep neural network, DNN. This allows for a reliable and sophisticated classification of images based on complex classification schemes.

In some embodiments, the method further comprises using the training data to train the first machine learning model as a classifier for classifying images having the second image style according to the classification scheme. Particularly, the images may each have an individual image content of a shared, i.e., common image style-invariant type. For example, all images show a same type of object (e.g., a container for a pharmaceutical product), but the images may differ in the perspective from which they show the object and thus have an individual image content (e.g., front view versus side view versus back view of the same object). Training the first ML-model as a classifier for images having the second image style optimizes the thus-trained first ML-model for classifying images sharing that second image style. If, for example, the first images are computer-generated images of a first image style and are then transformed using the second ML-Model into images having the second image style, i.e., a different image style, and then these transformed images are used for training the first ML-model, then the first ML-model can benefit from the possibility of using artificial images for its training while it is trained so as to be optimizes for classifying images of the second image style, which might be selected to be a photorealistic image style (e.g., as if taken by a particular camera under defined lighting conditions).

In some embodiments, at least one of the first and second image styles defines in relation of images of such image style one or more of a light condition, an image perspective, an image resolution, a property of a specific image sensor or specific category of image sensors used to take the image, an image coloring scheme, an image layout, a shadowing, an exposure time, a focus depth, a staining or defect in or on image sensor, a reflection, an optical distortion.

In some embodiments, the classification defines at least two different classes and at least one of the set of first images and the set of second images comprises two or more images, the individual image content of which pertains to different ones of the classes. In this way, training the second ML-model can be improved to become more robust regarding transforming images having different image contents.

In some embodiments, obtaining or accessing the training dataset comprises one or more of receiving, accessing, or generating one or more of the training images of the training dataset, and using at least one of the second images as a training image of the training dataset. In this way, efficiency can be increased because of a dual use of second images for both training the first and the second ML-models.

In some embodiments, training the second machine learning model comprises augmenting at least a subset of the first and second images with a corresponding labeling indicating for each such image individually an assignment according to the classification scheme based on such image's individual image content. Accordingly, the labeled image data used for training the second ML-model may be reused for training the first ML-model, or vice versa.

In some embodiments, the method further comprises training the first machine learning model based on the transformed and labeled training images. In this way, the generated training data is used to train the first ML-model, e.g., for image inspection. Accordingly, the method can thus serve to provide a trained ML-model for image inspection wherein the method itself generates the necessary training data, at least in parts.

In some embodiments, the first images and/or the second images share a common image style-invariant type of image content. Specifically, such image content may comprise a complete or partial image of a one or more products. Using a common image style-invariant type of image content helps to make the second ML-model more robust regarding transforming images of such content. Specifically, the common image style-invariant type of image content may comprise a complete or partial image of a one or more products, such as a representation of one or more containers (e.g., glass containers such as bottles or vials), for a pharmaceutical product.

In some embodiments, the method is performed in whole or in part by a cloud-based or distributed computing system. This allows for using high-performance computing power for the training process without a need to keep such high computing power locally, e.g., at the site or on the computer(s) on which the first ML-model, once trained, will be used for image inspection.

A second aspect of the present solution is directed to a data processing system, such as a computing system, comprising one or more processors configured to perform the method of the first aspect for generating training data.

A third aspect of the present solution is directed to a computer program or non-transitory computer-readable storage medium comprising instructions which when executed on a computer or multi-computer platform, such as the data processing system of the second aspect, cause the computer or multi-computer platform, respectively, to perform the method of the first aspect.

A fourth aspect of the present solution is directed to an inspection method for automated visual object inspection, the inspection method comprising:
(i) obtaining one or more test images of an object to be inspected, the test images having the second image style; and
(ii) using the first machine-learning model having been trained based on training data obtained by the method of generating training data according to the first aspect to classify the object according to the classification scheme.

In some embodiments, the inspection method is performed locally by an edge computing system at the site of an inspection for automatic visual object inspection of the object. Specifically, considering that the training of the second ML-Model may have been performed elsewhere, e.g., in a cloud environment or a distributed computing system, an expedient allocation of computing resources, each optimized for its particular task within the overall solution, may be achieved.

A fifth aspect of the present solution is directed to an inspection system for automatic visual object inspection of an object, the inspection system comprising one or more processors configured to perform the inspection method of the fourth aspect.

A sixth aspect of the present solution is directed to a computer program or non-transitory computer-readable storage medium comprising instructions which when executed on a computer or multi-computer platform cause the computer or multi-computer platform, respectively, to perform the inspection method of a computer program or computer program product comprising instructions which when executed on an inspection system of the fifth aspect cause it to perform the inspection method of the fourth aspect.

A seventh aspect of the present solution is directed to a use of the inspection method of the fourth aspect and/or of the inspection system of the fifth aspect to automatically perform a visual inspection of one or more containers, such as bottles or vials, for a pharmaceutical product. Such products typically require a very high reliability and need to be substantially defect-free while being manufactured in high volumes. Accordingly, being able to use reliable and highly efficient ML-based inspections methods and systems, as described herein, can be of a major advantage, particularly for such demanding applications.

The features and advantages explained herein regarding the first aspect of the solution apply accordingly to the further aspects of the solution.

The computer programs identified above may in particular be implemented in the form of a non-transitory computer-readable storage medium on which one or more programs for performing the respective method are stored. Particularly, the storage medium may be a solid-state disk (SSD), a magnetic storage (e.g., hard-disk drive, HDD), a CD, a DVD, or a flash memory module or card. This may be advantageous, if the computer program product is meant to be traded as an individual product independent of the processor platform on which the one or more programs are to be executed. In another implementation, the computer program is provided as a file on a data processing unit, in particular on a server, and can be downloaded via a data connection, e.g., via the Internet or a dedicated data connection, such as a proprietary or local area network.

The data processing system of the second aspect and/or the inspection system of the fourth aspect may thus each have a program memory in which the computer program of the third or sixth aspect, respectively, is stored. Alternatively, the system may also be set up to access a computer program available externally, for example on one or more servers or other data processing units, via a communication link, in particular to exchange with it data used during the execution of the computer program or representing outputs of the computer program.

### BRIEF DESCRIPTION OF THE DRAWINGS

Further advantages, features, and applications of the present solution are provided in the following detailed description and the appended figures, wherein:
**Figs. 1** **and** **2** collectively illustrate a combined training and inspection method in accordance with at least one exemplary embodiment;
**Fig. 3** illustrates exemplary images of products regarding which the method of Figs.1 and 2 can be performed;
**Fig. 4** illustrates various sub-processes and ML-models used by the method of Figs. 1 and 2; and
**Fig. 5** illustrates a combination of a cloud-based data processing system and a local inspection system for collectively performing the method of Figs. 1 and 2.

In the figures, identical reference signs are used for the same or mutually corresponding elements of the systems described herein.

When the following refers to a "step" or "steps" of the method, this does not mean that the associated action must necessarily take place in a single coherent operation. Rather, it is also possible that a "step" is composed of several individual operations in the sense of a process and thus corresponds to a sub-process of the method.

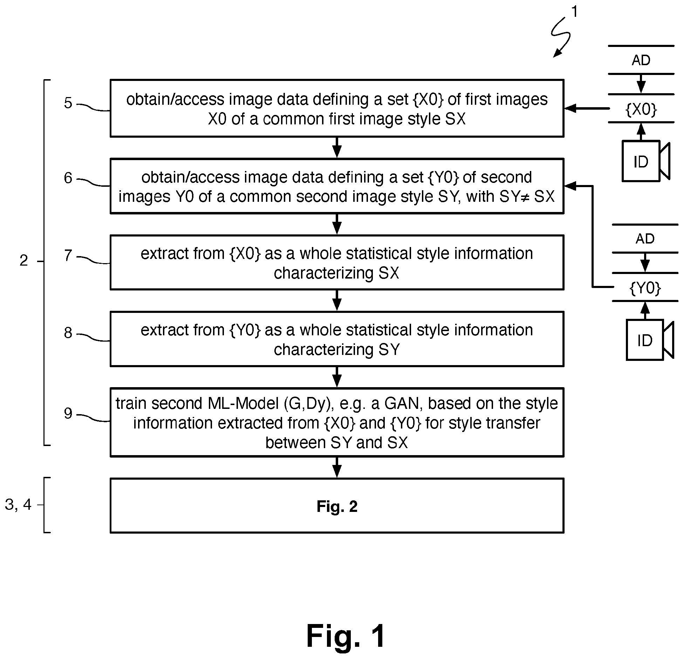

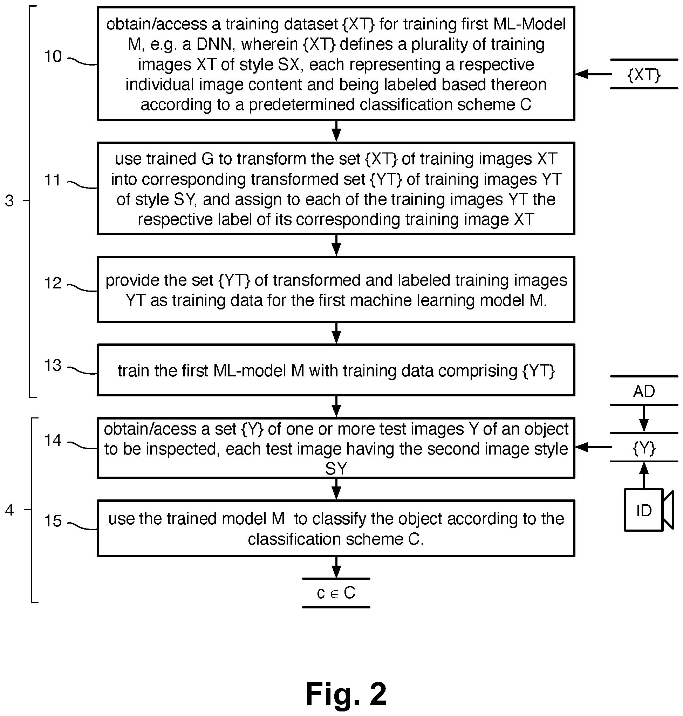

Although the method steps described in FIGS. 1 and 2 are presented in a specific order, a person skilled in the art will understand that other orders, which observe the dependencies between the steps, are possible as well and fall within the scope of the present solution. For example, in Fig. 2, the order of steps 5 to 8 can be modified, as long as the dependency is observed that image data needs to be obtained/accessed before style information is extracted therefrom.

### DETAILED DESCRIPTION OF EMBODIMENTS

**Figs. 1** **and** **2** collectively illustrate a combined training and inspection method 1 in accordance with at least one exemplary embodiment.

Method 1 comprises three phases 2, 3, and 4, all of which represent individual methods which may also be implemented individually:
The first phase 2 is defined as a training phase for training a generative Machine Learning Model G, such as a GAN (particularly a single GAN or cyclic GAN) as a style transfer model for transforming images having a first image style SX to corresponding images having a second, different image style SY. Herein, G is also referred to as "second machine learning model" or "second ML-model".

The second phase 3 is defined as a second training phase for training another machine learning model M that is defined as a classifier for image content, i.e., as an image classifier. Model M may particularly be implemented as a deep neural network (DNN), as schematically illustrated in Fig. 2. Herein, M is also referred to as "first machine learning model" or "first ML-model".

The third phase 4 is defined as an inspection phase in which the trained model M, as trained in phase 2, is used for inspection of images Y having the second image style SY. Particularly, in this phase 4, the trained model M can be used for inspecting images Y of the second image style SY which have not been used in any of the previous phases, i.e., which have not been used for training either model G or model M.

Referring now to the first phase 2, method 1 comprises steps (sub-processes) 5 to 9 which illustrate an exemplary embodiment of a method of training the model G. Phase 2 comprises steps 5 and 6 in which first and second image data is obtained or accessed otherwise, e.g., in a data storage. The first image data comprises a set {X0} of first images X0 having a common first image style SX. Similarly, the second image data comprises a set {Y0} of second images Y0 having a common second image style SY. Each of the first and second image data {X0} and {Y0}, respectively, may comprise one or more of (i) artificially generated image data AD, such as images having been generated through computer-aided design (CAD), and (ii) image data ID representing images having been generated using an image sensor, such as a camera.

Furthermore, phase 2 comprises steps 7 and 8 in which statistical style information characterizing the first image style SX is extracted from the set {X0} of first images as a whole, and similarly, statistical style information characterizing the second image style SY is extracted from the set {Y0} as a whole. Accordingly, after step 8, both image styles SX and SY are defined and available as represented by the respective statistical style information.

Now, the second machine learning model G, which may particularly be a GAN, for example of the SGAN and or cGAN type, can be trained based on this statistical style information so as to configure it as a generator for style transfer between image styles SX and SY. Specifically, model G can be trained so as to transfer an input image having image style SX into a corresponding output image of image Style SY, while the image content remains substantially unchanged during this transformation (i.e., if, for example, the input image X is showing a bottle then the resulting output image will still show that bottle, although with a different (transformed) image style, i.e., SY.

Referring now to the second phase 3, method 1 further comprises steps (sub-processes) 10 to 13 which illustrate an exemplary embodiment of a method of training the first machine learning model M, such as a DNN, for classifying images according to a predefined classification scheme C.

In step 10, a training dataset {XT} for training the first ML-model M is obtained or otherwise accessed, wherein {XT} defines a plurality of training images XT of the first image style SX. Each of these images XT represents a respective individual image content and is labeled based on such content according to a predefined classification scheme C, the label identifying the respective class c of the classification scheme, which had been assigned to the respective image XT based on the latter's image content.

The training data set {XT} thus includes training data intended for training model M. However, the training images XT in the data set {XT} all have image style SX, while model M shall later be used to classify images of the second image style SY and thus, for best performance and reliability, should rather to be trained with images having the second image style SY.

Therefore, a further step 11 is applied, wherein the previously trained second ML-model G is used to transform the training data set {XT} into a corresponding transformed training data set {YT} of training images YT of the second image style SY. Furthermore, this training step comprises assigning to each of the generated training images YT the respective label of its corresponding training image XT in accordance with classification scheme C. This is possible because the style transformation defined by the second ML-Model G leaves the image content substantially unchanged.

Now, in step 12, the obtained transformed set {YT} of labeled training images YT is provided as training data for training the first ML-model M, which training occurs in step 13. Steps 12 and 13 may be combined in the single step. This concludes phase 2.

Referring now to the third phase 3, method 1 further comprises the steps (sub-processes) 14 and 15 which illustrate an exemplary embodiment of an inspection method for inspecting and classifying images (hereinafter referred to as "test images") Y of the object(s) to be inspected. Preferably, to achieve the best classification results, each test image Y has the second image style as supplied.

Specifically, step 14 comprises obtaining or otherwise accessing a set {Y} of one or more test images Y of the object to be inspected wherein such test images may particularly be defined by image data AD having been artificially generated, or by image data ID having been captured using an image sensor.

Finally, step 15 comprises using the trained model M to classify the object according to the classification scheme C based on one or more of the related test images Y (such as real-time camera images of image style SY) of that object, thus yielding an associated class c defined within classification scheme C (inference).

The inspection method 4 of Phase 3 runs automatically. The same may apply to method 1 as a whole. While the inspection method 4 can be used in the inspection of pharmaceutical products, it may be used similarly for other mass products in the manufacturing industry and/or in the field of logistics for inspecting objects, such as parcels, letters, packages or wholly or partially unpackaged products or other logistic objects.

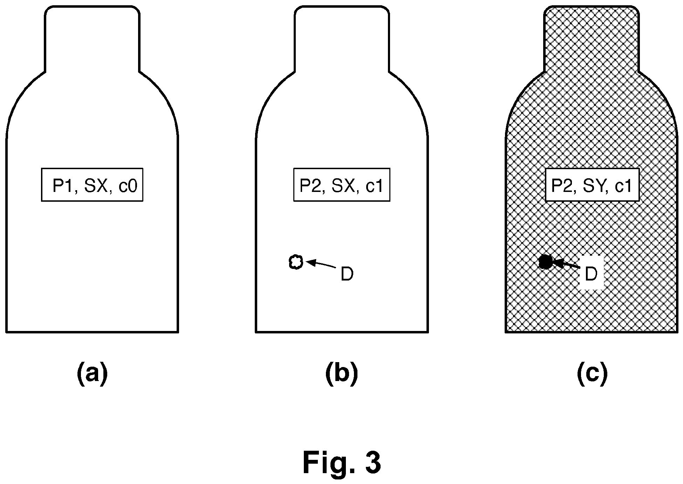

**Fig. 3** illustrates exemplary images of products P regarding which the method of Figs.1 and 2 can be performed. Specifically, the products P depicted in Fig. 3 are bottle-shaped containers for pharmaceutical products, such as liquid pharmaceuticals or cosmetics.

**Fig. 3 (a)** shows an image of a first product P1, the image having the first image style SX and the product P1 being associated with a first class c0 of classification scheme C, wherein the class c0 indicates that product P1 is defect-free.

**Figure 3 (b)** shows an image of another product P2 of the same type as P1 and using the same image style SX. In contrast to P1, product P2 is not defect-free but instead has at least one defect D, e.g., in its wall, such as a dent or some visible impurity. Accordingly, another class c1 of classification scheme C is assigned to product P2, wherein this class c1 indicates that the product P2 is defective.

**Fig. 3 (c)** shows another image of product P2, but this time, the image has the second image style SY. For example, the first image style SX might relate to bright lighting conditions, while the second image style SY might relate instead to relatively dark lighting conditions. Accordingly, considering a transformation of the image of Fig. 3 (b) of product P2 into a corresponding image of Fig. 3 (c) would essentially comprise a transformation of the lighting conditions while leaving the image content, i.e., the presentation of product P2 and its defect D, substantially unchanged.

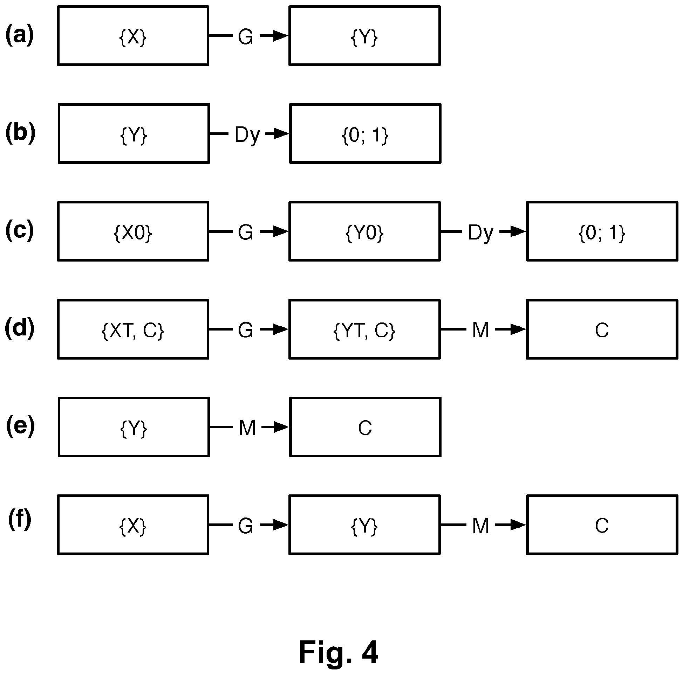

Referring now to **Fig. 4****,** various aspects of method 1 are now explained again in more detail.

**Fig. 4 (a)** illustrates the role of the second ML-model G, which is a generative model (Generator) defined to transfer image style, namely between the first image style SX and the second image style SY. Generators are models that map an image to another image and change the statistical properties of the image in the process. Specifically, Generator G can be used to receive a set {X} of input images of the first image style SX and transform them into a corresponding set {Y} of images of the second image style SY while leaving the image content substantially unchanged.

**Fig. 4 (b)** illustrates the function of another machine learning model, which is a so-called discriminator. Discriminators are models that predict the membership of an image to a given set {Z} of images. By way of an exemplary definition, the output "0" means that the image is assigned to the image set {Z} based on its statistical properties, while the output "1" means that it is not assigned to the image set {Z}. Specifically, a discriminator Dy is shown, which has the function of receiving one or more input images of a given image style and determining for each input image whether that particular image belongs to a set {Z}={Y}, i.e. whether the image has the second image style (the output "0") or not (the output "1").

**Fig. 4 (c)** illustrates the first phase 2 of method 1 in more detail. Specifically, training the generator G based on a set {X0} of first images of style SX and the second set {Y0} of images of the second image style SY using a GAN is shown. The GAN comprises the generator G and the discriminator Dy of Fig. 4 (b). During the training, the two models G and Dy are working against each other: while G generates images of image style SY, subsequent application of the discriminator Dy serves to evaluate whether the generated images do, in fact, qualify as images having image style SY. The training continues, until model G and discriminator Dy are both trained so well that it becomes hard to distinguish the image style of the output images of G from images Y the image style of which, as characterized by related statistical properties, is in fact SY. Thus, for image sets {X0} and {Y0} with different style statistics but similar content statistics, generator G and discriminator Dy are trained so that the images transformed by G are increasingly difficult to distinguish by the corresponding discriminator Dy (training of G and Dy). The generator thus transfers style statistics so that the discriminator increasingly assigns them to the target set {Y0}, i.e. to image style SY.

**Fig. 4 (d)** illustrates the second phase 3 of method 1 in more detail, i.e., the training of model M based on test image data comprising a set {XT} of test images of style SX and another set {YT} of test images of style SY. Each of the test images in set {XT} is labeled according to its individual image content, the label defining an assignment to a respective class c of classification scheme C.

The trained generator G resulting from the first phase 2 of method 1 is used to transform the test images XT in the set {XT} to corresponding test images YT of image style SY, and assigns to each of the test images YT the label of its corresponding test image XT. For pairs (YT, c), c is compared with M(YT)=c'. Parameters in the model M are adjusted using deep learning methods so that the error between c and c' is minimized (training of model M).

Accordingly, the set {YT} of transformed test images YT enables the training of model M for the classification of images Y, i.e. model M once trained maps images Y to a respective class c from C based on image content, as illustrated in **Fig. 4 (e)****.** In other words, application of the trained model M to images Y determines the prediction of the class c = M(Y) of image Y (inference).

**Fig. 4 (f)** illustrates the chain of models as a whole. The composition of generator G and model M transforms images X from {X} into corresponding images Y from {Y} with similar style statistics as images in X and then maps these to classes c∈C.

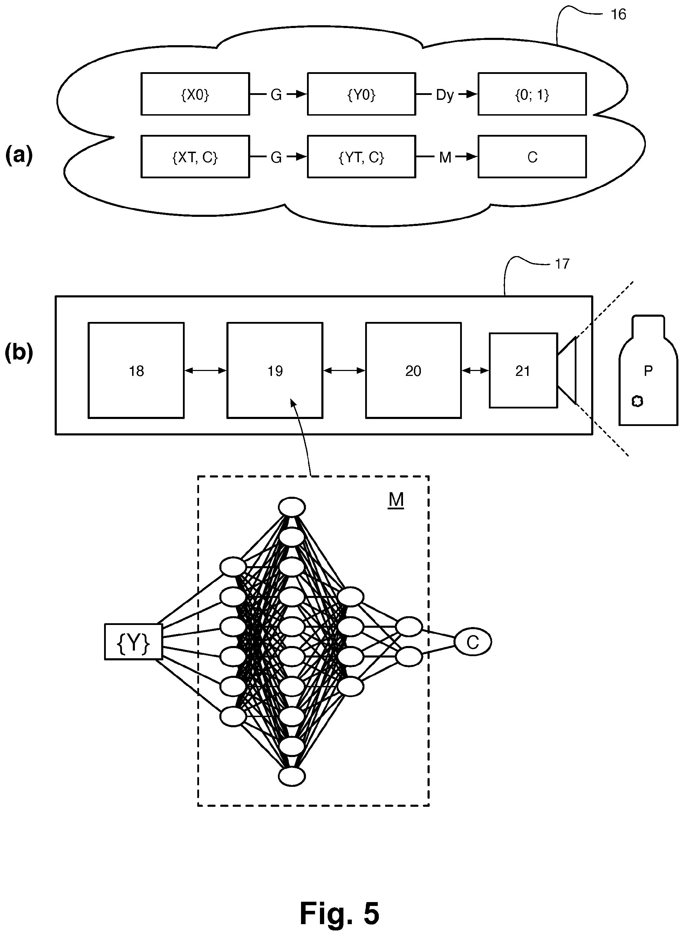

**Fig. 5** illustrates a combination of a cloud-based data processing system 16 and a local inspection system 17 for collectively performing the method 1 of figures 1 and 2.

Specifically, **Fig. 5 (A)** shows the cloud-based data processing system 16 which is particularly used for the training of the GAN, i.e. the combination of models G and Dy, and also for the training of model M. Performing these trainings in a cloud environment, where powerful computing resources are available is particularly useful to achieve high efficiency which would typically not be achievable in a local system with less powerful computing resources.

**Fig. 5 (b)****,** in turn, schematically illustrates inspection system 17 which can be provided locally at the location where the inspection takes place, e.g., within a manufacturing line or similar. Inspection system 17 comprises a processing platform 18 with one or more processors, an associated program memory 19 (e.g. of the SSD or HDD type) and an associated data memory 20, both memories being accessible by processing platform 18.

These memories may coincide and may particularly be of the SSD or HDD type. Other memory technologies can be used as well, particularly nonvolatile memory technologies. The program memory stores model M, which is implemented as a DNN in computer program(s), which when executed on the processing platform 18 implement the function associated with M, i.e. the capability of classifying images Y∈{Y} of products P according to classification scheme C.

Inspection system 17 further comprises one or more image sensors 21, such as cameras working in the visual range and/or one or more of the infrared and ultraviolet ranges of the electromagnetic spectrum, for capturing images, such as photos, of the products P to be inspected.

While above at least one exemplary embodiment of the present solution has been described, it has to be noted that a significant number of variations thereto exists. Furthermore, it is appreciated that the described exemplary embodiments only illustrate non-limiting examples of how the present solution can be implemented and that it is not intended to limit the scope, the application, or the configuration of the herein-described apparatuses and methods. Rather, the preceding description will provide the person skilled in the art with constructions for implementing at least one exemplary embodiment of the present solution, wherein it must be understood that various changes of functionality and the arrangement of the elements of the exemplary embodiment can be made, without deviating from the subject-matter defined by the appended claims and their legal equivalents.

### LIST OF REFERENCE SIGNS

- 1: combined training and inspection method
- 2: training method for second ML-Model G
- 3: training method for first ML-Model M
- 4: inspection method using trained first ML-Model M
- 5-9: steps or sub-processes of method 2
- 10-13: steps or sub-processes of method 3
- 14-15: steps or sub-processes of method 4
- 16: data processing system, cloud-based
- 17: inspection system, e.g., local at inspection site
- 18: processing platform with one or more processors
- 19: program memory, e.g., SSD or HDD
- 20: data memory, e.g., SSD or HDD
- 21: image sensor(s), e.g., camera(s)

- AD: artificial image data, e.g., CAD images
- C: (image) classification scheme
- c: class in C
- c0: first class in C, "defect-free"
- c1: second class in C, "defect"
- D: defect
- Dy: discriminator for style Y, part of second ML-Model
- ID: image data generated by image sensor, e.g., camera
- M: first machine learning model M, e.g., DNN, for image classification
- G: Generator of second (generative) machine learning model
- P,P1, P2: product, e.g., container for pharmaceutical, or other object
- SX: first image style
- SY: second image style
- X: image of style SX
- {X}: set of first images X, comprising a plurality of first images X
- X0: first images of style SX
- {X0}: set of first images X0, comprising a plurality of first images X0
- XT: training image of style SX
- {XT, c}: training data set for M, comprising a plurality of training images XT
- Y: image of style SY
- {Y}: set of first images Y, comprising a plurality of first images Y
- {Y0}: set of second images of style SY
- YT: transformed training image of style SY
- {YT, c}: transformed training data set for M

## Claims

1. Computer-implemented method (1) of generating training data ({YT}) for a first machine learning model (M) for image classification, the method (1) comprising:
Obtaining or accessing (5; 6) a set ({X0}) of first images (X0) sharing a common first image style (SX) and a set ({Y0}) of second images (Y0) sharing a common second image style (SY) being different from the first image style (SX), wherein each of the first and second images (X0, Y0) individually represents a respective individual image content;
using (7, 8, 9) the sets ({X0}, {Y0}) of first and second images (X0, Y0) to train a generative second machine-learning model (G, Dy) so that the second machine-learning model (G, Dy) defines a non-affine transformation between the first image style (SX) and the second image style (SY), the training (7, 8, 9) comprising:
extracting (7), from the set (X0) of first images ({X0}) as a whole, statistical style information representing one or more specific properties characterizing the first image style (SX);
extracting (8) from the set ({Y0}) of second images (Y0) as a whole statistical style information representing one or more specific properties of the second image style (SY), and
training (9) the second machine learning model (G, Dy) to define the transformation as an image transformation for transferring the extracted properties of the second image style (SY) to the first images (X0), so as to transform the first images (X0) into corresponding output images (Y), each having the second image style (SY) while preserving their individual image content; and
generating (10,11,12) training data for training the first machine learning model (M), comprising:
obtaining or accessing (10) a training dataset ({XT}) defining a plurality of training images (XT) sharing the first image style (SX), each of the training images (XT) representing a respective individual image content and being individually labeled based on its individual image content according to a predetermined classification scheme (C);
transforming (11) the training images (XT) into corresponding transformed training images (YT) using the trained second machine learning model (G, Dy) and assigning to each of the transformed training images (YT) the respective labeling (c) of its corresponding training image (XT); and
providing (12) the set ({YT}) of transformed and labeled training images (YT, c) as training data for the first machine learning model (M).

2. Method (1) according to claim 1, wherein obtaining or accessing (6) the set ({X0}) of first images ({X0}) comprises receiving or generating one or more computer-generated images (AD) as first images (X0).

3. Method (1) according to claim 1 or 2, wherein obtaining or accessing (5) the set ({Y0}) of second images comprises receiving, accessing or generating one or more image sensor (21)-generated images (ID) as second images (YT).

4. Method (1) according to any one of the preceding claims, wherein the second machine learning model (G, Dy) comprises a Generative Adversarial Network, GAN.

5. Method (1) according to claim 4, wherein the GAN comprises or consists of a Single GAN or a conditional GAN.

6. Method (1) according to claim 5, wherein the GAN comprises or consists of a conditional GAN of the cyclic GAN type.

7. Method (1) according to any one of the preceding claims, wherein the first machine learning model (M) comprises or consists of an artificial deep neural network, DNN.

8. Method (1) according to any one of the preceding claims, further comprising using the training data ({YT, c}) to train the first machine learning model (M) as a classifier for classifying images according to the classification scheme (C).

9. Method (1) according to any one of the preceding claims, wherein at least one of the first and second image styles (SX, SY) defines in relation of images of such image style (SX, SY) one or more of a light condition, an image perspective, an image resolution, a property of a specific image sensor (21) or specific category of image sensor (21) used to take the image, an image coloring scheme, an image layout, a shadowing, an exposure time, a focus depth, a staining or defect in or on image sensor (21), a reflection, an optical distortion.

10. Method (1) according to any one of the preceding claims, wherein the classification scheme (C) defines at least two different classes (c0, c1) and at least one of the set of first images ({X0}) and the set of second images ({Y0}) comprises two or more images the individual image content of which pertains to different ones of the classes (c0, c1).

11. Method (1) according to any one of the preceding claims, wherein obtaining or accessing the training dataset ({XT}, c) comprises one or more of:
receiving, accessing, or generating one or more of the training images (XT), of the training dataset ({XT}, c), and
using at least one of the second images (Y0) as a training image of the training dataset ({XT}, c).

12. Method (1) according to any one of the preceding claims, wherein training (9) the second machine learning model (G, Dy) comprises augmenting at least a subset of the first and second images (X0, Y0) with a corresponding labeling indicating for each such image individually an assignment according to the classification scheme (C) based on such image's individual image content.

13. Method (1) according to any one of the preceding claims, further comprising training (13) the first machine learning model (M) based on the transformed and labeled training images {{YT}, c).

14. In some embodiments, the first images (X0) and/or the second images (X1) share a common image style-invariant type of image content.

15. Method (1) according to claim 14, wherein the common image style-invariant type of image content comprises a complete or partial image of a one or more products (P).

16. Method (1) according to claim 15, wherein the common image style-invariant type of image content represents, at least in part, one or more containers for a pharmaceutical product.

17. Method (1) according to any one of the preceding claims, wherein the method (1) is performed in whole or in part by a cloud-based or distributed computing system (16).

18. Data processing system (16) comprising one or more processors (18) configured to perform the method (1) of any one of the preceding claims for generating training data.

19. Computer program or non-transitory computer-readable storage medium comprising instructions which when executed on a computer or multi-computer platform cause the computer or multi-computer platform, respectively, to perform the method (1) of any one of claims 1 to 17

20. Inspection method (1) for automated visual object inspection, the inspection method (1) comprising:
obtaining one or more test images of an object (P) to be inspected, the test images having the second image style (SY); and
using the first machine-learning model having been trained based on training data obtained by the method (1) of generating training data according to any one of claims 1 to 17 to classify the object according to the classification scheme (C).

21. Inspection method (4) according to claim 20, wherein the inspection method (4) is performed locally by an edge computing system (17) at the site of an inspection system (17) for automatic visual object inspection of the object.

22. Inspection system (17) for automatic visual object inspection of an object, the inspection system (17) comprising one or more processors (18) and having access to a program memory (19) in which one or more programs are stored, which when executed on the one or more processors (18) cause the Inspection system (17) to carry out the inspection method (4) of claim 20 or 21.

23. Computer program or non-transitory computer-readable storage medium comprising instructions which when executed on a computer or multi-computer platform cause the computer or multi-computer platform, respectively, to perform the inspection method (1) of claim 20 or 21.

24. Use of the inspection method (1) of claim 20 or 21 and/or of the inspection system (17) of claim 22 to automatically perform a visual inspection of one or more containers (P) for a pharmaceutical product.
